# EUROPEAN PATENT SPECIFICATION

(11) **EP 2 367 447 B1**
(45) Date of publication and mention of the grant of the patent: **31.07.2019**
(21) Application number: 09796209.6
(22) Date of filing: 17.12.2009
(51) Int. Cl.: A23L 7/117, A23L 7/139, A23L 7/143, A23L 7/148

(54) **OATMEAL CEREAL PRODUCT MADE FROM SMALL OAT GROATS AND FINES**
HAFERFLOCKENPRODUKT AUS HAFERSCHROT UND FEINTEILEN
PRODUIT CÉRÉALIER DE TYPE PORRIDGE OBTENU À PARTIR DE PETITS GRUAUX ET BRISURES D'AVOINE

(30) Priority: 19.12.2008 US 139055 P
(43) Date of publication of application: 28.09.2011
(73) Proprietor: The Quaker Oats Company, Chicago, IL 60661 (US)
(72) Inventor: HANSA, Jim, Algonquin, IL 60102 (US); GRIEBAT, Joe, Mechanicsville, IA 52306 (US); KESSLER, Jerome, Chicago, IL 60661 (US)
(74) Representative: Jenkins, Peter David
(86) International application number: PCT/US2009/068521
(87) International publication number: WO 2010/080513

(56) References cited:
- CA-A1- 2 620 609
- US-A- 2 864 702
- US-A- 3 620 760
- US-A- 3 704 134
- US-A- 4 603 055
- US-A1- 2008 102 190

## Description

### FIELD OF THE INVENTION

The invention relates to oatmeal prepared with small oat groats and fines. In particular, the invention relates to oatmeal prepared with small oat groats and fines products with quick hydration in heated or cold cereal products.

### BACKGROUND OF THE INVENTION

Natural cereals, such as hot oat cereals, are well accepted by consumers. With respect to oats, this may be due, in part, to the widespread publication of the beneficial impact of oat bran in providing a healthful lowering of low density lipoprotein cholesterol components in the human system.

The oat is a highly nutritious grain, not only in terms of possessing outstanding soluble fiber levels, but also in terms of the richness of its protein, mineral, and lipid content, as well as other nutritive components.

Also, the widespread utilization of these benefits would be enhanced by improvements in the convenience of consumer preparation, and by improvements in the quality of the consumer prepared product.

In addition, the increasingly stringent consumer standards for high quality products, in terms of both organoleptic and convenience attributes, and in terms of healthful nutritional impact, must be met in the products of very economical processes in order for the cereal product to survive in the current, highly competitive marketplace. Moreover, such products, when packaged in conventional packaging materials, must be shelf stable, to the extent of remaining in a desirably consumable form, and in a form which is readily prepared by the consumer, during the time after manufacture, thru the distribution and marketing systems, prior to the consumption by the consumer.

In addition to the organoleptic properties and characteristics of, for example, aroma and flavor, texture and other factors, such as convenience of preparation, are important in the success of competitive hot cereal products. For example, there is a variety of flake thicknesses made to meet consumer preferences and demands, such as for example "Steam Table," "Old Fashioned," "Quick," and "Instant" types. Differentiating characteristics of these types of products include not only flake thickness but also convenience of consumer preparation, as reflected in preparation time and attention required. "Instant" types are convenient as they entail the addition of hot water or hot milk. It is desired that the oats hydrate quickly in the hot water or milk.

Alternatively, cold cereals are enjoyed by many and having a cold oat-based cereal that hydrates quickly in cold milk is desirable as well.

US 2864702 dates from 1958 and refers to an oat cereal product and process for obtaining the same. US 4603055 discloses a process for the preparation of multiple grain flaked cereal. US 3620760 discloses a process of producing a cook in the bowl type of hot breakfast cereal. US 3704134 discloses a process for preparing an instant oat cereal. US 2008/102190 discloses a method for cooking porridge. CA 2620609 describes products formed by sieving oatmeal or cereal groats.

### BRIEF SUMMARY OF THE INVENTION

A first aspect of the present invention provides a cut whole groat oatflake product comprising cut whole groat oat flakes having a thickness from 0.4064 mm (0.016 inches) to 0.508 mm (0.020 inches), a length from 1.27 mm (0.05 inches) to 3.81 mm (0.15 inches), and a width from 1.27 mm (0.05 inches) to 3.81 mm (0.15 inches. A second aspect of the present invention provides an instant oat cereal product comprising the whole groat cut oat flake product of the first aspect of the present invention. A third aspect of the present invention provides a cold oat cereal product comprising the cut whole groat oat flake product of the first aspect of the present invention. A fourth aspect of the present invention provides a method according to claim 7 of producing cut whole groat oat flakes of the cut whole groat oat flake product of the first aspect of the present invention. Preferred aspects are defined in the dependent claims.

The preferred embodiments of the present invention can provide a cut oat flake product with a hydration rate sufficient to allow quick hydration in heated instant cereal products and a cut oat flake product with a hydration rate sufficient to allow quick hydration in cold cereal products.

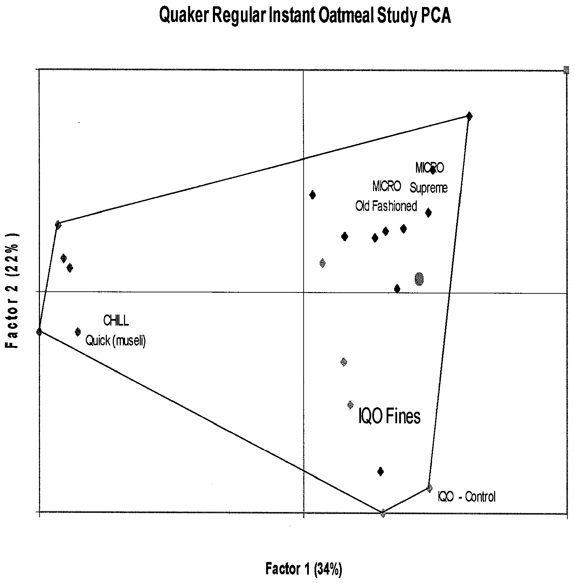

### BRIEF DESCRIPTION OF THE FIGURE

The Figure depicts scales used in the example comparing results for oats based on

A cut oat flake product that has a hydration rate sufficient to allow for quick hydration in both hot and cold cereal products, is also described.

The instant oat flakes of the invention are made from a typical instant oat process but with additional size separations. The smaller flakes are separated by taking the smallest 1-10% of the instant oat stream. These flakes possess unique properties which allow new oatmeal products to be created. One such property is a creamy style instant hot cereal with a smooth creamy texture without pastiness upon setting. This property is created by the additional heat penetration into the small oat groats and the unruptured starch granules in the flaking process. The mouthfeel of the porridge is smoother based on the smaller sized particles.

Another benefit is the utilization of this flake in a ready-to-eat instant oat product made by adding cold milk. This oat fraction posses a smoother texture with less dry centers due to the smaller piece size. This oat fraction also posses a higher toast level then the aggregate prior to screening and is therefore more beneficial in both uncooked and cooked offerings.

The product is produced by screening instant cut and flaked oats to obtain the smallest 10 % particle sizes. The screening provides cut and oat flakes having a thickness from 0.4064 mm (0.016 inches) to 0.508 mm (0.020 inches), a length from 1.27 mm (0.05 inches) to 3.81 mm (0.15 inches), and a width from 1.27 mm (0.05 inches) to 3.81 mm (0.15 inches).

### Hot Cereal

Hot cereal is produced by the addition of hot water or hot milk in an amount sufficient to hydrate the cut and flaked oats. Hot cereal produced with the cut oat flake product in accordance with the present invention is creamier than typical instant oatmeal. The thickness of the hot cereal is less than instant oatmeal to provide a less viscous product when milk or water is added. The oatmeal pieces are finer but the hot cereal maintains its firmness. In addition the hot cereal is less gummy and has less mouthcoating than typical instant oatmeal and provides a higher toast flavor.

The hot cereal of the present invention requires more water to prepare. This allows for a more satiating product than those product produced with less water. For example, 24 grams of cut and flaked oatmeal with 6 grams of flavoring requires ²/₃ cup of water compared to instant oatmeal which requires ½ cup water.

### Chilled Cereal

The cut oat flake product of the invention can be used to make a chilled cereal. The cut oat flake product absorbs cold milk more readily than instant oats and quick oatmeal. The flakes become fully hydrated more quickly due to their smaller size. In addition, the cut oat flake product provides a more toasted flavor than other uncooked offerings.

The amount of milk added to a cold cereal depends on the tastes of the consumer but generally about ¼ cup of milk is added to about 24 grams of oats and flavorings.

In particular, an embodiment of the invention is directed to such a cut oat flake product that allows for instant oatmeal and cold oatmeal products.

The skilled practitioner recognizes that whole oat groats are whole hulled oat grains. Thus-prepared hulled oat grains then are cut and flaked by any known method. The smallest 10% of the cut and flaked oats is separated by screening. This smallest 10% is used to prepare the instant oats and chilled oat cereal product of the invention. The smallest 10% generally has a thickness less than about 0.020 inches, a length less than about 0.15 inches, and a width less than to about 0.15 inches. In particular, the cut oat flake product has a thickness from about 0.016 to about 0.020 inches, a length from about 0.05 to about 0.15 inches, and a width from about 0.05 to about 0.15 inches.

The cut oat flake product does not contain particles larger that those having a thickness less than about 0.020 inches, a length less than about 0.15 inches, and a width less than to about 0.15 inches.

The instant oats may be prepared by the addition of hot water or hot milk to the dry cut and flaked oat product having the sizes described above. Alternatively, the water or milk may be added to the oatmeal and then the product heated in a microwave. The skilled practitioner recognizes that microwave ovens differ in power delivered to the product being heated. The about 1 minute cooking time relates to an average or typical consumer microwave oven. A more powerful oven likely will cook the product in less time, but the time is not likely to be inversely proportional to the power applied.

Healthy oat-containing foods, and in particular, oatmeal, can easily and safely be prepared from products of embodiments of this invention.

The texture of product obtained in accordance with embodiments of the invention is favored by consumers. As the hydration and cooking of the oat flakes is done quickly, there exists less opportunity to degrade the texture toward mushiness. Thus, the product is not mealy, mushy, pasty, or slimy. Of course, it is possible to adjust the quantity of water to prepare and thinner or thicker oatmeal in embodiments of the invention. These minor adjustments provide the consumer with a customizable product that is well-received for its pleasing texture and mouthfeel and flavor judged to be of superior quality.

The resultant product is a tasty grain product appreciated by consumers for both its organoleptic properties and characteristics and its quick and easy method for preparation. The product also is healthy and nutritious, as it is a whole grain product.

Whereas embodiments of the invention described hereinabove related only to oats, products comprising products made in accordance with embodiments of the invention also can be mixed with various flavors and colors. Flavoring is an organoleptic property and characteristic that likely will appeal to consumers of all ages. Coloring might appeal more to children, but adults can appreciate a colorful product as well.

The skilled practitioner is familiar with flavor systems suitable for use in, for example, oatmeal breakfast cereal. Examples of suitable flavors include fruits, including in particular apple and peach; spices, including cinnamon and nutmeg; and other flavors, such as brown sugar, maple, and nuts, including walnuts and pecans. Flavor systems also can include pieces of fruit, typically as freeze-dried pieces that are re-hydrated when the oat flakes are hydrated.

Miscellaneous materials, such as sugar, salts (sodium chloride, potassium chloride, and others), other flavoring agents, vitamins and minerals, oils, butylated hydroxytoluene and other preservatives, packaging agents such as anti-clumping agents, and other materials also can be present in minor amounts. The skilled practitioner will be able to identify other constituents that are well-known in cereal formulations and well-known as compatible with oat cereal in general and product of the invention in particular, and will be able to determine the correct quantity for use with the embodiments of the invention.

Other grains may be present with the oatmeal, typically in small quantities. Corn grit, wheat flake, and other grains can be included with the oat flakes. Adding such other grains or other products may change the texture and flavor of the combination and may add nutrients not found in oats.

### Example

Three cereals were produced and tested by trained experts for product attributes. The experts agreed on an intensity scale for the products. Then they rated the product attributes on a scale from 0-9. The only difference between the three types of products was the flake type.

The cut and flaked instant oatmeal of the present invention was creamier than regular instant oatmeal. It also had less thickness viscosity. The finer pieces maintained firmness and the oatmeal was less gummy and had less mouthcoating. The cut and flaked instant oatmeal of the present invention also had a higher toast flavor.

In a consumer study of the three cereals, the creamier style cut oatmeal prepared in accordance with the present invention was preferred by many consumers when the inventive oatmeal was compared to oatmeal prepared with other oats such as old fashioned oats, quick oats, and steel cut fines.

Oat products in accordance with the present invention were taste-tested. The testers were instructed to rate the prepared product on two scales of organoleptic properties and characteristics, "Nutty/Brown Sugar/Rough" and "Powdery to Thick/Slick/Gummy." Tasters also evaluated other oatmeal products prepared in a microwave oven.

All products were compared to a 'target' flavor. The target flavor of oatmeal is an oatmeal flavor that is relatively high on the "Thick/Slick/Gummy" scale and midrange on the "Nutty/Brown Sugar/Rough" scale. The scales range from 0 to 100 on the "Nutty/Brown Sugar/Rough" scale and from 0 (Powdery) to 100 (Thick/Slick/Gummy) on the "Thick/Slick/Gummy" scale.

As shown in the figure, creamy oatmeal prepared in accordance with the present invention occupies a unique sensory space in that it contains a higher thick/slick/gummy feel and a lower nutty/brown sugar/rough/ compared to other oats.

## Claims

1. A cut whole groat oat cake product comprising cut whole groat oat flakes having a thickness from 0.4064 mm (0.016 inches) to 0.508 mm (0.020 inches), a length from 1.27 mm (0.05 inches) to 3.81 mm (0.15 inches), and a width from 1.27 mm (0.05 inches) to 3.81 mm (0.15 inches.)

2. An instant oat cereal product comprising the whole groat cut oat flake product of claim 1.

3. An instant oat cereal product according to claim 2, which is a hot cereal produced by the addition of hot water or hot milk.

4. An instant oat cereal product according to claim 3 wherein 24 grams of cut and flaked whole groat oatmeal with 6 grams of flavoring requires 2/3 cup of water compared to instant oatmeal which requires ½ cup water.

5. A cold oat cereal product comprising the cut whole groat oat flake product of claim 1.

6. A cold oat cereal product according to claim 5 wherein about ¼ cup of milk is added to about 24 grams of oats and flavorings.

7. A method of producing cut whole groat oat flakes as described in claim 1, comprising cutting a whole groat into at least three pieces, flaking the cut pieces, and screening the cut and flaked pieces to separate oat flakes having a thickness from 0.4064 mm (0.016 inches) to. 0.508 mm (0.020 inches), a length from 1.27 mm (0.05 inches) to 3.81 mm (0.15 inches), and a width from 1.27 mm (0.05 inches) to 3.81 mm (0.15 inches).

## Patentansprüche

1. Flockenprodukt aus geschnittener Hafervollkorngrütze, das Flocken aus geschnittener Hafervollkorngrütze mit einer Dicke von 0,4064 mm (0,016 Zoll) bis 0,508 mm (0,020 Zoll), einer Länge von 1,27 mm (0,05 Zoll) bis 3,81 mm (0,15 Zoll) und einer Breite von 1,27 mm (0,05 Zoll) bis 3,81 mm (0,15 Zoll) umfasst.

2. Fertig-Haferzerealienprodukt, das das Flockenprodukt aus geschnittener Hafervollkorngrütze nach Anspruch 1 umfasst.

3. Fertig-Haferzerealienprodukt nach Anspruch 2, das eine warme Zerealie ist, die durch Zugabe von warmem Wasser oder warmer Milch hergestellt wird.

4. Fertig-Haferzerealienprodukt nach Anspruch 3, wobei 24 Gramm Hafermehl aus geschnittener und geflockter Vollkorngrütze mit 6 Gramm Aromastoff 2/3 Tasse Wasser benötigen, im Vergleich zu Fertighafermehl, das 1/2 Tasse Wasser benötigt.

5. Kaltes Haferzerealienprodukt, das das Flockenprodukt aus geschnittener Hafervollkorngrütze aus Anspruch 1 umfasst.

6. Kaltes Haferzerealienprodukt nach Anspruch 5, wobei etwa 1/4 Tasse Milch zu etwa 24 Gramm Hafer und Aromastoffen gegeben wird.

7. Verfahren zur Herstellung von Flocken aus geschnittener Hafervollkorngrütze wie in Anspruch 1 beschrieben, das Folgendes beinhaltet: Schneiden von Vollkorngrütze in wenigstens drei Stücke, Herstellen von Flocken aus den geschnittenen Stücken und Sieben der geschnittenen und geflockten Stücke, um Haferflocken mit einer Dicke von 0,4064 mm (0,016 Zoll) bis 0,508 mm (0,020 Zoll), einer Länge von 1,27 mm (0,05 Zoll) bis 3,81 mm (0,15 Zoll) und einer Breite von 1,27 mm (0,05 Zoll) bis 3,81 mm (0,15 Zoll) abzutrennen.

## Revendications

1. Produit à base de flocons d'avoine obtenus à partir de gruaux entiers coupés, comprenant des flocons d'avoine obtenus à partir de gruaux entiers coupés ayant une épaisseur de 0,4064 mm (0,016 pouce) à 0,508 mm (0,020 pouce), une longueur de 1,27 mm (0,05 pouce) à 3,81 mm (0,15 pouce) et une largeur de 1,27 mm (0,05 pouce) à 3,81 mm (0,15 pouce).

2. Produit céréalier contenant de l'avoine instantanée comprenant le produit à base de flocons d'avoine obtenus à partir de gruaux entiers coupés, selon la revendication 1.

3. Produit céréalier contenant de l'avoine instantanée selon la revendication 2, qui est une céréale chaude produite en ajoutant de l'eau chaud ou du lait chaud.

4. Produit céréalier contenant de l'avoine instantanée selon la revendication 3, dans lequel 24 grammes de porridge obtenu à partir de gruaux entiers coupés et en flocons, contenant 6 grammes d'aromatisant, doivent être mélangés à 2/3 de tasse d'eau par rapport au porridge instantané qui n'en a besoin que d'1/2 tasse.

5. Produit céréalier contenant de l'avoine froide comprenant le produit à base de flocons d'avoine obtenus à partir de gruaux d'avoine entiers coupés, selon la revendication 1.

6. Produit céréalier contenant de l'avoine froide selon la revendication 5, dans lequel environ 1/4 de tasse de lait est ajoutée à environ 24 grammes d'avoine et d'aromatisants.

7. Procédé de production de flocons d'avoine coupés obtenus à partir de gruaux d'avoine entiers, selon la revendication 1, consistant à découper un gruau entier en au moins trois morceaux, de réduire en flocons les morceaux coupés, et de tamiser les morceaux coupés et en flocons pour séparer les flocons d'avoine ayant une épaisseur de 0,4064 mm (0,016 pouce) à 0,508 mm (0,020 pouce), une longueur de 1,27 mm (0,05 pouce) à 3,81 mm (0,15 pouce) et une largeur de 1,27 mm (0,05 pouce) à 3,81 mm (0,15 pouce).
